# EUROPÄISCHE PATENTSCHRIFT

(11) **EP 1 446 969 B1**
(45) Veröffentlichungstag und Bekanntmachung des Hinweises auf die Patenterteilung: **22.10.2014**
(21) Anmeldenummer: 01274870.3
(22) Anmeldetag: 19.11.2001
(51) Int. Cl.: H04W 8/26, H04W 4/00

(54) **Verfahren, Kommunikationseinheit und System zur identifizierung eines dienstes**
Method, system and communications unit for the identification of a service
Procédé, système et unité de communication d'identification d'un service

(43) Veröffentlichungstag der Anmeldung: 18.08.2004
(73) Patentinhaber: Siemens Aktiengesellschaft, 80333 München (DE)
(72) Erfinder: KLEHN, Norbert, 14612 Falkensee (DE); ZAUS, Robert, 80686 München (DE)
(86) Internationale Anmeldenummer: PCT/DE2001/004389
(87) Internationale Veröffentlichungsnummer: WO 2003/049477

(56) Entgegenhaltungen:
- GB-A- 2 347 305

## Beschreibung

Die vorliegende Erfindung betrifft ein Verfahren zur Identifizierung eines Dienstes, angefordert durch einen Ruf zu einer mobilen Kommunikationseinheit von und/oder über ein Festnetz und über ein mobiles Kommunikationsnetz. In digitalen mobilen Kommunikationsnetzen bzw. in PLMNs (Public Land Mobile Network), wie beispielsweise in einem GSM- oder einem UMTS-Netz wird ein Ruf zu einer Kommunikationseinheit, mit dem ein bestimmter Dienst angefordert wird, in der Regel vorab in einer sogenannten call set-up phase der Kommunikationseinheit signalisiert. Das bedeutet, dass für den Ruf bzw. für den Dienst spezifische Informationen übermittelt werden. Bei den angefordeten Diensten kann es sich dabei beispielsweise um einen Sprachdienst, um einen Datendienst oder einen Faxdienst handeln. Eine vorherige Signalisierung dient dazu, einem Netz und/oder einem Endgerät, wie beispielsweise einer mobilen Kommunikationseinheit die Möglichkeit zu geben, zu überprüfen, ob der angeforderte Dienst unterstützt werden kann oder ob ein Nutzer überhaupt berechtigt ist, einen bestimmten Dienst zu nutzen. Ferner können anhand einer derartigen Rufsignalisierung die entsprechenden Vorkehrungen zum Aufbau des Rufes getroffen werden. Die für einen Ruf bzw. für einen durch einen Ruf angeforderten Dienst spezifischen Informationen werden im Allgemeinen in einer Signalisierungsnachricht, einer sogannten call set-up message mitgeteilt. Dabei werden sie wiederum je nach Art der Information wohl definierten Informationselementen zugeordnet. Eines der Informationselemente trägt alle ruf- bzw. dienstspezifischen Trägerfähigkeiten, man spricht von BC (Bearer Capability). Ein zweites Informationselement wird als LLC (Low Layer Compatibility) und ein drittes als HLC (High Layer Compatibility) bezeichnet. Diese Informationselemente müssen von der Kommunikationseinheit bereitgestellt werden, von dem der Ruf ausgeht. Während LLC- und HLC-Informationselemente beim Transport durch die zu passierenden Netze transparent sind, kann das BC-Informationselement entsprechend den Bedürfnissen der einzelnen Netze variieren. So sind beispielsweise für ein ISDN und ein PLMN unterschiedliche BC-Informationselemente definiert. An Schnittstellen zwischen den verschiedenen Netzen werden diese BC-Informationselemente aufeinander abgebildet.

Ein Problem dabei ist, dass die gelieferten abzubildenden Informationselemente meistens nicht vollständig sind. Entweder stellt die rufausgebende Kommunikationseinheit nicht alle von der rufentgegennehmenden Kommunikationseinheit erwarteten Informationen bereit oder ein zu passierendes Netz ist nicht in der Lage, die Information zu transportieren. Letzteres ist beispielsweise der Fall, wenn unter den zu passierenden Netzen ein analoges Netz, wie beispielsweise ein PSTN (Public Switched Telephone Network) ist oder nationale Versionen von ISDN Signalisierungsmechanismen verwendet werden. Im Falle, dass es sich bei der rufentgegennehmenden Kommunikationseinheit um eine mobile Kommunikationseinheit handelt, ist es ein Problem für das mobile Kommunikationsnetz zu bestimmen, welcher Dienst durch den Ruf angefordert wird.

GSM/UMTS Standards spezifizierten dabei zwei verschiedene Mechanismen, wobei einer der Mechanismen als single-numbering scheme bezeichnet wird und der zweite als multi-numbering scheme.

Im Fall des single-numbering schemes erhält ein Nutzer bzw. eine mobile Kommunikationseinheit nur eine Nummer, die für alle Dienste gültig ist, die der Nutzer berechtigt ist zu nutzen. Dabei wird davon ausgegangen, dass ein angeforderter Dienst seitens eines Festnetzes beispielsweise mittels der Informationen, die von den Informationselementen BC, LLC, HLC geliefert werden, identifiziert werden kann. Das Informationselement BC (im folgenden nur als BC bezeichnet), das beispielsweise von ISDN erhalten wird, wird im PLMN, d.h. genauer gesagt, in einem für die mobile Kommunikationseinheit zum Zeitpunkt des Rufaufbaus zuständigen Mobile Switching Center (MSC), Visited Mobile Switching Center (VMSC) genannt, auf ein PLMN BC abgebildet. Dieses PLMN BC wird der mobilen Kommunikationseinheit zugesendet, wenn es vollständig ist. Gemäß den GSM/UMTS Standards ist es nicht zulässig, ein unvollständiges BC an die mobile Kommunikationseinheit zu senden. Wenn das PLMN nicht in der Lage ist, ein vollständiges BC zu kreieren, so wird kein BC an die mobile Kommunikationseinheit gesendet. In diesem Fall muss die mobile Kommunikationseinheit den Dienst auswählen ohne eine Information bezüglich des Dienstes zu haben. Wenn der von der mobilen Kommunikationseinheit ausgewählte Dienst nicht dem Dienst entspricht, der von dem Festnetz kommt, so wird der den Dienst anfordernde Ruf verworfen. Wenn beispielsweise die mobile Kommunikationseinheit einen Sprachdienst auswählt, vom Festnetz aber ein Datendienst mittels eines Modems kommt, so wird ein Ruf nicht aufgebaut. Das single-numbering scheme ist somit gut anwendbar, wenn von dem Festnetz ausreichend Information geliefert wird, um ein vollständiges BC kreieren zu können.

Im Fall des multi-numbering schemes erhält ein Nutzer bzw. eine mobile Kommunikationseinheit verschiedene Nummern, nämlich für jeden Dienst, den er berechtigt ist zu nutzen, genau eine. Dadurch wählt die Kommunikationseinheit, von welcher ein Ruf zur Anforderung eines Dienstes ausgeht, bereits durch Eingabe einer entsprechenden Nummer den bestimmten Dienst aus. Ein entsprechendes vollständiges PLMN BC, das der Nummer zugeordnet ist, ist in einem HLR (Home Location Register) des PLMN gespeichert. Dabei ist jeder Nummer genau ein PLMN BC zugeordnet. Das vollständige PLMN BC, das den angeforderten Dienst identifiziert, wird an eine rufentgegennehmende mobile Kommunikationseinheit gesendet. Es kann dabei von dem HLR über ein VLR (Visitor Location Register) und das Visited Mobile Switching Center (VMSC) zu der mobilen Kommunikationseinheit geleitet werden. Das multi-numbering scheme ist anwendbar, wenn das Festnetz keine ausreichende Information liefern kann.

Der Vorteil des single-numbering schemes ist die Tatsache, dass Nummern eingespart werden. Der Nachteil ist, dass im Falle, dass kein vollständiges BC kreiert werden kann, die mobile Kommunikationseinheit ohne jegliche Information einen Dienst auswählen muss.

Das multi-numbering scheme hat den Vorteil, dass die mobile Kommunikationseinheit ein vollständiges dienstspezifisches BC erhält. Dabei müssen aber für ein und denselben Nutzer sehr viele Nummern zur Verfügung gestellt werden, nämlich für jeden Dienst, den der Nutzer nutzen darf, eine Nummer. Dieser Nachteil wird umso deutlicher als der Bereich vergebbarer Nummern begrenzt ist und die Zahl der Nutzer in den gegenwärtigen Netzen ständig ansteigt.

Das Dokument GB 2347305 offenbart ein Verfahren zur Identifizierung eines Dienstes.

Eine Aufgabe der vorliegenden Erfindung war es somit, ein Verfahren bereitzustellen, mit dessen Hilfe es möglich ist, unter Vergabe einer Minimalzahl an Nummern für ein und denselben Nutzer einer mobilen Kommunikationseinheit zu ermöglichen, mit möglichst hoher Wahrscheinlichkeit einen Dienst genau identifizieren zu können, d.h. eine möglichst vollständige Information bezüglich für einen Dienst bzw. einen entsprechenden Ruf spezifischen Trägerfähigkeiten zu liefern.

Gelöst wird diese Aufgabe durch ein erfindungsgemäßes Verfahren gemäß Anspruch 1. Weitere vorteilhafte Ausführungsformen des erfindungsgemäßen Verfahrens sind in den entsprechenden Unteransprüchen aufgeführt.

Gemäß Anspruch 1 wird ein Verfahren zur Identifizierung eines Dienstes, angefordert durch einen Ruf zu einer mobilen Kommunikationseinheit von und/oder über ein Festnetz und über ein mobiles Kommunikationsnetz, bereitgestellt, wobei alle verfügbaren Teilinformationen bezüglich für den durch den Ruf angeforderten Dienst spezifischer Trägerfähigkeiten gesammelt, zusammengeführt und zur Identifizierung des durch den Ruf angeforderten Dienstes verwertet und der mobilen Kommunikationseinheit mitgeteilt werden. Bei dem mobilen Kommunikationsnetz handelt es sich dabei im Allgemeinen um ein sogenanntes, bereits erwähntes PLMN (Public Land Mobile Network). Das Festnetz kann beispielsweise ein ISDN (Intergrated Services Digital Network) oder ein PSTN (Public Switched Telephone Network) sein.

In einer bevorzugten Ausführungsform des erfindungsgemäßen Verfahrens wird in einer Signalisierungsnachricht (call setup message) an die mobile Kommunikationseinheit mit für den Ruf spezifischen Informationselementen (LLC, HLC, BC) ein Zusatz-Informationselement vorgesehen, in dem alle verfügbaren, gesammelten Informationen bezüglich für den Ruf spezifischen Trägerfähigkeiten zusammengeführt werden. Im Folgenden soll dieses Zusatz-Informationselement als BACKUP bezeichnet werden. Während es aufgrund der GSM/UMTS Standards nicht zulässig ist, ein unvollstäniges BC an eine mobile Kommunikationseinheit zu senden, so kann das erfindungsgemäß vorgesehene BACKUP auch unvollständige Information bezüglich der für einen Ruf spezifischen Trägerfähigkeiten aufweisen. Mittels des BACKUPs, das in der Signalisierungsnachricht, der sogenannten, eingangs bereits erwähnten call set-up message an die mobile Kommunikationseinheit gesendet wird, ist im Vergleich zu keiner BC die Wahrscheinlichkeit sehr viel größer, dass das Netz und/oder die mobile Kommunikationseinheit den Ruf identifizieren kann und entsprechend prüfen kann, ob sie den dem Ruf entsprechenden Dienst unterstützen kann und/oder ob der Nutzer berechtigt ist, den Dienst in Anspruch zu nehmen. Gegebenenfalls können zur Annahme des Rufes entsprechende Vorkehrungen getroffen werden. Der Nutzer hat weiterhin nur eine einzige, ihm für alle Dienste zugeordnete Nummer, was den Vorteil hat, dass der Betreiber des mobilen Kommunikationsnetzes, d.h. im Allgemeinen des PLMNs, Nummern einsparen kann.

In einer weiteren bevorzugten Ausführungsform des erfindungsgemäßen Verfahrens wird das Zusatz-Informationselement (BACKUP) in einem Visited Mobile Switching Center (VMSC) des mobilen Kommunikationsnetzes kreiert. Dem Nutzer bzw. der mobilen Kommunikationseinheit wird, wie bereits erwähnt, eine Nummer zugeordnet, die in einem entsprechenden HLR (Home Location Register) gespeichert ist. Kommt nun ein Ruf für diese Nummer im PLMN an einem Gateway Mobile Switching Center (GMSC) an, so wendet sich die GMSC an ein zuständiges HLR zwecks Aufenthaltsbestimmung der mobilen Kommunikationseinheit des gerufenen Nutzers. Dazu fordert das HLR wiederum mittels einer Anforderungsnachricht (Provide Roaming Number) eine sogenannte Roaming Number von einem entsprechenden für den aktuellen Aufenthaltsort des Nutzers zuständiges VLR (Visitor Location Register) an. Mit dieser Roaming Number lässt sich der Ruf zur für die mobile Kommunikationseinheit zuständige VMSC weiterleiten, so dass die VMSC die ursprünglich signalisierten Informationen erhält. Gleichzeitig hat das HLR mit der Anforderungsnachricht an das VLR alle verfügbaren Informationen bezüglich der für den Ruf spezifischen Trägerfähigkeiten mitgeliefert. Hierbei handelt es sich implementierungsabhängig entweder um die ursprünglich empfangene Information (ISDN BC) oder um das im HLR gebildete PLMN BC. Im letzteren Fall wird das PLMN BC nur mitgeliefert, falls es vollständig ist. Eine für die mobile Kommunikationseinheit zuständige VMSC ruft diese Information von dem VLR ab. Ist die VMSC nicht in der Lage aufgrund der erhaltenen Informationen ein vollständiges PLMN BC zu bilden, kreiert sie damit das Zusatz-Informationselement BACKUP, das sie dann in einer Signalisierungsnachricht an die mobile Kommunikationseinheit sendet.

In einer anderen bevorzugten Ausführungsform kann das Zusatz-Informationselement (BACKUP) auch bereits in einem zuständigen HLR kreiert werden. Es wird dann in der oben genannten Anforderungsnachricht an das VLR geliefert. Von dort ist es dann für die VMSC verfügbar.

Vorzugsweise werden alle Informationen, die das Zusatz-Informationselement umfasst, von dem Festnetz, d.h. beispielsweise von einem ISDN oder einem PSTN und/oder von dem mobilen Kommunikationsnetz, d.h. im Allgemeinen einem PLMN bezogen. Ein ISDN liefert zumindest eine ITC (Information Transfer Capability) Information. Dieser Parameter zeigt an, ob ein Übertragungsträger für Sprache (ITC="speech"), für analoge Datenübertragung, wie z.B. durch Modems gefordert (ITC="3.1 kHz Audio"), oder für digitale Datenübertragung (ITC="UDI") gefordert wird. Es ist ebenfalls erkennbar, ob ein synchrones (d.h. bitorientiertes) oder asynchrones (d.h. zeichenorientiertes) Datenübertragungsverfahren gefordert ist. Der Parameter HLCI (High Layer Characteristics Information) des HLC Informationselements bezeichnet eine gewünschte Anwendung. Facsimile wird beispielsweise durch HLCI="Facsimile Gr.3" gekennzeichnet. HLCI="Telephony" charakterisiert einen Telefonruf. Im Parameter UR (User Rate) werden geforderte Übertragungsgeschwindigkeiten signalisiert. Informationen, die das PLMN liefert, beziehen sich auf Standardeinstellungen bzw. auf Vorzugswerte, die im PLMN zur Anwendung kommen. Beispiele sind die Anzeige verfügbarer bzw. bevorzugter Radiokanalkodierungen, Übertragungsqualitäten (mit oder ohne Datensicherungsprotokoll) oder maximale Übertragungsgeschwindigkeiten.

In einer besonders bevorzugten Ausführungsform des erfindungsgemäßen Verfahrens wird als mobiles Kommunikationsnetz ein digitales PLMN, insbesondere ein GSM- oder ein UMTS-Netz, gewählt.

In einer weiteren bevorzugten Ausführungsform des erfindungsgemäßen Verfahrens wird in einem HLR des mobilen Kommunikationsnetzes eine bestimmte Anzahl von verschiedenen Diensten einer Nummer derart zugeordnet, dass unter zusätzlicher Verwendung der verfügbaren, gesammelten und zusammengeführten Teilinformationen bezüglich für den Dienst spezifischen Trägerfähigkeiten eine Identifizierung des Dienstes möglich wird und dies der mobilen Kommunikationseinheit mitgeteilt wird. Ein vollständiges BC kann generiert und der mobilen Kommunikationseinheit zugesendet werden.

Hierbei werden Informationen, die in einem HLR gespeichert sind, sehr effektiv ausgenutzt. Kommt ein Ruf beispielsweise von einem ISDN, so wird bereits eine gewisse Information, wie beispielsweise eine ITC, mitgeteilt, die im HLR verwertet werden kann. Einem Nutzer wird beispielsweise im HLR für mehrere Dienste nur eine Nummer zugeordnet. Unter Zuhilfenahme der Information, die vom Festnetz, wie beispielsweise dem ISDN geliefert wird, ist das HLR in den meisten Fällen in der Lage, einen Ruf bzw. einen entsprechenden Dienst eindeutig zu identifizieren und somit eine vollständige BC für das mobile Kommunkationsnetz, d.h. beispielsweise ein PLMN BC, aufzubauen und an die mobile Kommunikationseinheit zu senden. In einigen wenigen Fällen, in denen die Information, die vom Festnetz kommt, nicht ausreicht, um einen Dienst zu identifizieren, werden einem Nutzer bzw. einer mobilen Kommunikationseinheit mehrere Nummern zugeordnet, wobei aber jede Nummer wiederum für mehrere Dienste zuständig ist. Im Unterschied zum eingangs vorgestellten multi-numbering scheme werden erfindungsgemäß einem Nutzer bzw. einer mobilen Kommunikationseinheit nur so viele Nummern zugeteilt wie erforderlich sind, um unter Zuhilfenahme der dem HLR zugeführten Information seitens des Festnetzes einen angeforderten Dienst identifizieren zu können. Das bedeutet, dass das Verfahren eine möglichst effektive Nummernzuteilung gewährleistet und ein Betreiber des mobilen Kommunikationsnetzes gegenüber dem multi-numbering scheme Nummern einspart.

Vorzugsweise ist bei dieser bevorzugten Ausführungsform des erfindungsgemäßen Verfahrens eine eindeutige Identifizierung möglich.

Für den Fall, dass hierbei keine eindeutige Identifizierung möglich ist, d.h. dass trotz verfügbarer Information aus dem Festnetz bei der Identifizierung eine Auswahl an möglichen Diensten verbleibt, ist es erfindungsgemäß denkbar, anstelle der Vergabe weiterer Nummern an einen Nutzer, das in der ersten vorgestellten bevorzugten Ausführungsform des Verfahrens vorgesehene Zusatz-Informationselement, genannt BACKUP, bereits im HLR zu kreieren und mit den Informationen zu belegen, die man im HLR zur Verfügung hat. Das sind zum einen die Informationen aus dem Festnetz (beispielsweise ITC) und die durch die Nummernzuordnung bereits etwas eingeschränkte Auswahl an in Frage kommenden Diensten. Wird dieses BACKUP in einer Signalisierungsnachricht an die mobile Kommunikationseinheit gesendet, so ist die Wahrscheinlichkeit, dass seitens der mobilen Kommunikationseinheit der richtige Dienst identifiziert werden kann wesentlich höher als beispielsweise bei dem eingangs vorgestellten single-numbering scheme. Aus der Kombination der beiden vorgestellten bevorzugten Ausführungsformen des erfindungsgemäßen Verfahrens ergibt sich somit eine dritte bevorzugte Ausführungsform des erfindungsgemäßen Verfahrens.

Weitere Vorteile des erfindungsgemäßen Verfahrens werden anhand der folgenden Figuren näher erläutert. Es zeigen
Fig. 1 eine schematische Darstellung eines Verlaufs einer Ausführungsform des erfindungsgemäßen Verfahrens
Fig. 2 eine schematische Darstellung einer Nummernzuordnung in einem HLR in einem mobilen Kommunikationsnetz gemäß einer weiteren bevorzugten Ausführungsform des erfindungsgemäßen Verfahrens

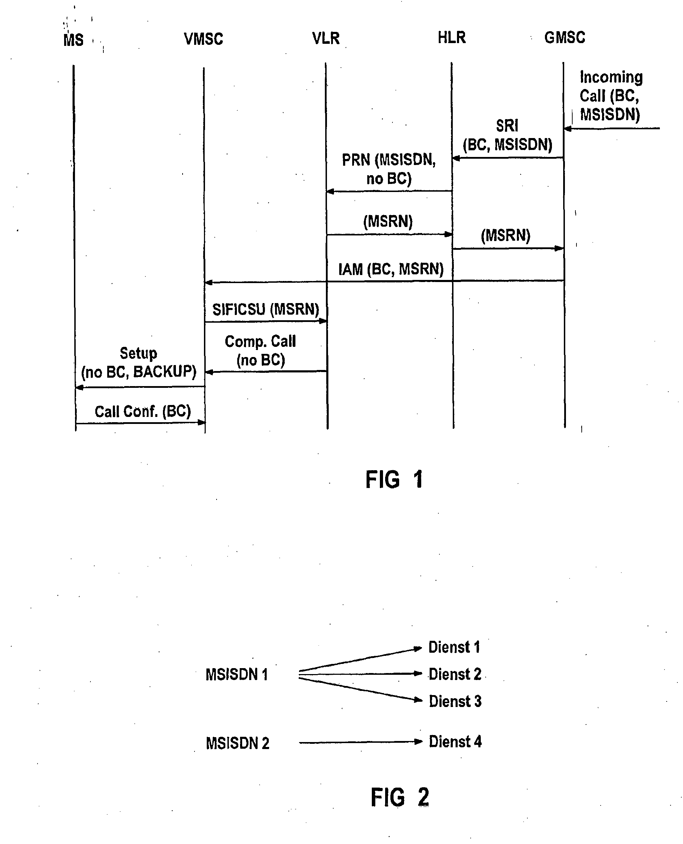

In Figur 1 ist schematisch dargestellt, welche einzelnen Schritte in einem mobilen Kommunikationsnetz, wie beispielsweise einem PLMN ablaufen, wenn ein Ruf (call) von einem Festnetz, wie beispielsweise einem ISDN, kommt. Der aus dem ISDN kommende, an eine mobile Kommunikationseinheit MS gerichtete Ruf (call), der durch ein bestimmtes für das ISDN spezifisches Informationselement bezüglich der Trägerfähigkeit, d.h. ein ISDN-BC, und eine der mobilen Kommunikationseinheit MS zugeordneten Nummer MSISDN gekennzeichnet ist, gelangt zuerst zu einem sogenannten Gateway Mobile Switching Center (GMSC). Die GMSC versucht nun den Standort der mobilen Kommunikationseinheit zu ermitteln, d.h. die Adresse (Nummer) des MSCs zu bestimmen, die gegenwärtig die mobile Kommunikationseinheit bedient. Diese MSC heißt Visited Mobile Switching Center (VMSC). Zur Ermittlung des Aufenthaltortes der mobilen Kommunikationseinheit sendet die GMSC zunächst eine Routing Informationsnachricht SRI (Send Routing Information) an ein für die mobile Kommunikationseinheit MS zuständiges HLR (Home Location Register). Diese Routing Informationsnachricht beinhaltet auch die ISDN-BC und die MSISDN. Das HLR hat nun die Aufgabe, den Ort des über die MSISDN adressierten Nutzers inklusive seiner mobilen Kommunikationseinheit zu bestimmen und es hat außerdem die Aufgabe zu bestimmen, ob dem Nutzer erlaubt ist, den durch den Ruf geforderten Dienst zu nutzen. Hierzu wird eine PLMN BC benötigt, die diesen geforderten Dienst beschreibt. Diese PLMN BC kann generiert werden wie eingangs beschrieben entsprechend der beiden standardisierten Verfahren single- bzw. multi-numbering scheme. Wie ebenfalls eingangs beschrieben, ist das meist nicht möglich oder mit unerwünschten Randbedingungen verbunden. Für die Beschreibung dieser bevorzugten Ausführungsform des erfindungsgemäßen Verfahrens wird somit davon ausgegangen, dass das HLR nicht in der Lage ist, eine vollständige PLMN-BC zu generieren. Demgemäß wird entsprechend den Standards von GSM/UMTS keine PLMN BC generiert. Damit kann das PLMN nicht eindeutig bestimmen, welcher mobilfunkspezifischer Dienst gefordert wird. Zur Realisierung der Aufgabe der Standortbestimmung der mobilen Kommunikationseinheit fordert das HLR in einer weiteren Nachricht PRN (Provide Roaming Number) von einem für die MS zuständigen VLR (Visitor Location Register) eine sogenannte Roaming Number an, mit deren Hilfe die mobile Kommunikationseinheit MS lokalisiert werden kann. In der Nachricht PRN wird nun zwar weiter die MSISDN mitgeliefert, aber keine BC. Das VLR schickt dann eine Roaming Number für die mobile Kommunikationseinheit MS (MSRN) an das HLR zurück. Das HLR gibt diese Roaming Number MSRN weiter an das Gateway Mobile Switching Center (GMSC). Von dort wird die vom Festnetz empfangene ursprüngliche Signalisierungsnachricht IAM (Initial Address Message) an einen für die MS zuständiges Visited Mobile Switching Center (VMSC) geschickt, wobei die Nachricht IAM sowohl die Information der ISDN-BC wie auch die Mobile Station Roaming Number MSRN trägt. Die VMSC fordert dann in einer weiteren Nachricht, der sogenannten SIFICSU (Send Information For Incoming Call Set Up), von dem VLR das eventuell vom HLR generierte PLMN BC an, das in eine Signalisierungsnachricht (call set-up message) an die mobile Kommunikationseinheit aufgenommen werden soll. Das VLR kann aber, wie oben beschrieben, keine vollständige PLMN-BC liefern. Daraufhin generiert die VMSC ein Zusatz-Informationselement, ein sogenanntes BACKUP. Dieses BACKUP beinhaltet alle verfügbaren Informationen bezüglich der für den Ruf bzw. für den durch den Ruf angeforderten Dienst spezifischen Trägerfähigkeiten. Dieses BACKUP wird dann in der call set-up message zusammen mit anderen Informationselementen an die mobile Kommunikationseinheit gesendet. Mittels dieser nicht vollständigen Information bezüglich der für den Ruf bzw. für den durch den Ruf angeforderten Dienst spezifischen Trägerfähigkeiten ist die mobile Kommunikationseinheit MS nun mit größerer Wahrscheinlichkeit in der Lage, den richtigen Dienst zu identifizieren als ohne jegliche Information. Das Zusatz-Informationselement BACKUP wird als neuer optionaler Parameter für die call set-up message definiert. Das ermöglicht es, dass ältere mobile Kommunikationseinheiten, die diese neue Funktionalität nicht kennen, diesen Parameter ignorieren und den Ruf wie gewohnt aufbauen können. Damit ist das erfindungsgemäße Verfahren rückwärts kompatibel, d.h. es ist in existierenden mobilen Kommunikationsnetzen nachträglich implementierbar.

Figur 2 zeigt eine Nummernzuordnung in einem HLR eines mobilen Kommunikationsnetzes, wie beispielsweise eines PLMN. Einem Nutzer einer mobilen Kommunikationseinheit MS werden im vorliegenden Ausführungsbeispiel zwei Nummern, nämlich MSISDN 1 und MSISDN 2 zugeordnet. Der Nutzer der mobilen Kommunikationseinheit MS ist berechtigt, vier verschiedene Dienste in Anspruch zu nehmen. MSISDN 1 ist dabei für drei verschiedene Dienste, wie beispielsweise für einen Sprachdienst, einen FAX-Dienst und einen Datendienst anzuwählen. Ein vierter Dienst, wie beispielsweise ein digitaler Multimedia-Dienst, wird über MSISDN 2 angewählt bzw. angefordert. Wird nun die MSISDN 1 angewählt, so ist das HLR unter Zuhilfenahme der Signalisierungsinformation seitens des ISDN in der Lage, die drei Dienste zu unterscheiden, bzw. unter diesen drei Diensten auszuwählen, welcher Dienst durch den Ruf angefordert wird. Es kann also eine eindeutige Identifizierung der Dienste anhand der Signalisierungsinformation seitens des ISDN vornehmen. Wird ein digitaler Multimedia-Dienst angefordert, so muss MSISDN 2 angewählt werden, da die Signalisierungsinformation seitens des ISDN die gleiche ist wie beispielsweise bei einem digitalen Datendienst. Insofern könnte das HLR bei gleicher MSISDN nicht entscheiden, ob es sich um den einen oder den anderen Dienst handelt. In diesem Fall reicht die Signalisierungsinformation seitens des Festnetzes, d.h. hier des ISDN nicht aus, um eine eindeutige Identifizierung eines Dienstes gewährleisten zu können. Es wird dann eine zusätzliche Nummer MSISDN 2 vergeben. Im Unterschied zum multi-numbering scheme werden hier aber nicht ohne Berücksichtigung der Signalisierungsinformation des Festnetzes für jeden Dienst eine Nummer vergeben, sondern nur dann, wenn die Signalisierungsinformation seitens des Festnetzes nicht'ausreicht. Jegliche zur Verfügung stehende Information bezüglich der für den Ruf bzw. für den durch den Ruf angeforderten Dienst spezifischen Trägerfähigkeiten wird genutzt und effektiv verwertet.

## Patentansprüche

1. Verfahren zur Identifizierung eines Dienstes, angefordert durch einen Ruf zu einer mobilen Kommunikationseinheit (MS) von und/oder über ein Festnetz und/oder über ein mobiles Kommunikationsnetz,
**dadurch gekennzeichnet,**
**dass** in einer Signalisierungsnachricht (Setup) an die mobile Kommunikationseinheit mit für den Dienst spezifischen Informationselementen ein Zusatz-Informationselement (BACKUP) vorgesehen wird, in dem alle verfügbaren, gesammelten Informationen bezüglich für den Dienst spezifischen Trägerfähigkeiten zusammengeführt und zur Identifizierung des Dienstes verwertet und der mobilen Kommunikationseinheit mitgeteilt werden.

2. Verfahren nach Anspruch 1,
**dadurch gekennzeichnet,**
**dass** das Zusatz-Informationselement als rückwärts kompatibles Element vorgesehen wird.

3. Verfahren nach einem der vorhergehenden Ansprüche,
**dadurch gekennzeichnet,**
**dass** das Zusatz-Informationselement in einer VMSC kreiert wird.

4. Verfahren nach einem der vorhergehenden Ansprüche,
**dadurch gekennzeichnet,**
**dass** das Zusatz-Informationselement in einem HLR kreiert wird.

5. Verfahren nach einem der vorhergehenden Ansprüche,
**dadurch gekennzeichnet,**
**dass** das Zusatz-Informationselement die Informationen, die es umfasst, von dem Festnetz und/oder von dem mobilen Kommunikationsnetz erhält.

6. Verfahren nach einem der vorhergehenden Ansprüche,
**dadurch gekennzeichnet,**
**dass** in einem HLR des mobilen Kommunikationsnetzes eine bestimmte Anzahl von verschiedenen Diensten einer Nummer (MSISDN) derart zugeordnet wird, dass unter zusätzlicher Verwendung der verfügbaren, gesammelten und zusammengeführten Teilinformationen bezüglich für den Dienst spezifischen Trägerfähigkeiten eine Identifizierung des Dienstes möglich wird und dies der mobilen Kommunikationseinheit mitgeteilt wird.

7. Verfahren nach Anspruch 6,
**dadurch gekennzeichnet,**
**dass** eine eindeutige Identifizierung möglich wird.

8. Verfahren nach einem der vorhergehenden Ansprüche,
**dadurch gekennzeichnet,**
**dass** als mobiles Kommunikationsnetz ein digitales PLMN, insbesondere ein GSM- oder ein UMTS-Netz, gewählt wird.

9. Verfahren nach einem der vorhergehenden Ansprüche,
**dadurch gekennzeichnet,**
**dass** als Festnetz ein digitales Netz, insbesondere TSDN, verwendet wird.

10. Verfahren nach einem der Ansprüche 1 bis 8,
**dadurch gekennzeichnet,**
**dass** als Festnetz ein analoges Netz, insbesondere PSTN, gewählt wird.

11. System zur Durchführung eines der vorstehenden Verfahren.

12. Mobile Kommunikationseinheit, umfassend Mittel zu einer durch einen Ruf zu einer mobilen Kommunikationseinheit (MS) von und/oder über ein Festnetz und/oder über ein mobiles Kommunikationsnetz angeforderten Identifizierung eines Dienstes unter Verwertung eines Zusatz-Informationselementes (BACKUP),
- das in einer der mobilen Kommunikationseinheit mitgeteilten Signalisierungsnachricht (Setup) mit für den Dienst spezifischen Informationselementen vorgesehen wird, und
- in dem alle verfügbaren, gesammelten Informationen bezüglich für den Dienst spezifischen Trägerfähigkeiten zusammengeführt werden.

## Claims

1. Method for identification of a service, requested by a call to a mobile communications unit (MS) from and/or via a landline network and/or via a mobile communications network,
**characterized**
**in that** an additional information element (BACKUP) is provided in a signalling message (Setup) to the mobile communications unit with information elements which are specific for that service, in which all of the available, collected information relating to the bearer capabilities which are specific for that service is collated and used to identify the service and is signalled to the mobile communications network.

2. Method according to Claim 1,
**characterized**
**in that** the additional information element is provided as a backwards-compatible element.

3. Method according to one of the preceding claims,
**characterized**
**in that** the additional information element is created in a VMSC.

4. Method according to one of the preceding claims,
**characterized**
**in that** the additional information element is created in an HLR.

5. Method according to one of the preceding claims,
**characterized**
**in that** the additional information element obtains the information which it comprises from the landline network and/or from the mobile communications network.

6. Method according to one of the preceding claims,
**characterized**
**in that**, in an HLR of the mobile communications network, a specific number of different services are associated with one number (MSISDN) such that identification of the service is possible, and this is signalled to the mobile communications unit with the additional use of the available, collected and collated information elements relating to bearer capabilities which are specific for that service.

7. Method according to Claim 6,
**characterized**
**in that** unique identification is possible.

8. Method according to one of the preceding claims,
**characterized**
**in that** a digital PLMN, in particular a GSM or a UMTS network, is selected as the mobile communications network.

9. Method according to one of the preceding claims,
**characterized**
**in that** a digital network, in particular ISDN, is used as the landline network.

10. Method according to one of Claims 1 to 8,
**characterized**
**in that** an analog network, in particular PSTN, is selected as the landline network.

11. System for carrying out one of the preceding methods.

12. Mobile communications unit, comprising means for identification of a service using an additional information element (BACKUP), said identification being requested by a call to a mobile communications unit (MS) from and/or via a landline network and/or via a mobile communications network,
- which additional information element is provided in a signalling message (Setup) signalled to the mobile communications unit with information elements which are specific for that service, and
- in which additional information element all of the available, collected information relating to the bearer capabilities which are specific for that service is collated.

## Revendications

1. Procédé pour l'identification d'un service demandée par un appel allant vers une unité de communication mobile (MS) et venant d'un et/ou via un réseau fixe et/ou via un réseau de communication mobile, **caractérisé en ce qu'**est prévu, dans un message de signalisation (Setup) adressé à l'unité de communication mobile et contenant des éléments d'information spécifiques pour le service, un élément d'information additionnel (BACKUP) dans lequel toutes les informations disponibles collectées relatives à des capacités de support spécifiques pour le service sont regroupées et exploitées pour identifier le service et communiquées à l'unité de communication mobile.

2. Procédé selon la revendication 1, **caractérisé en ce que** l'élément d'information additionnel est prévu en tant qu'élément rétrocompatible.

3. Procédé selon l'une des revendications précédentes, **caractérisé en ce que** l'élément d'information additionnel est créé dans un VMSC.

4. Procédé selon l'une des revendications précédentes, **caractérisé en ce que** l'élément d'information additionnel est créé dans un HLR.

5. Procédé selon l'une des revendications précédentes, **caractérisé en ce que** l'élément d'information additionnel reçoit du réseau fixe et/ou du réseau de communication mobile les informations qu'il contient.

6. Procédé selon l'une des revendications précédentes, **caractérisé en ce que**, dans un HLR du réseau de communication mobile, un nombre déterminé de services différents est associé de manière telle à un numéro (MSISDN) qu'une identification du service devient possible en utilisant additionnellement les informations partielles disponibles, collectées et regroupées qui sont relatives à des capacités de support spécifiques pour le service et que cela est communiqué à l'unité de communication mobile.

7. Procédé selon la revendication 6, **caractérisé en ce qu'**une identification univoque devient possible.

8. Procédé selon l'une des revendications précédentes, **caractérisé en ce qu'**est sélectionné, en tant que réseau de communication mobile, un PLMN numérique, et plus particulièrement un réseau GSM ou un réseau UMTS.

9. Procédé selon l'une des revendications précédentes, **caractérisé en ce qu'**est utilisé, en tant que réseau fixe, un réseau numérique, et plus particulièrement ISDN.

10. Procédé selon l'une des revendications 1 à 8, **caractérisé en ce qu'**est sélectionné, en tant que réseau fixe, un réseau analogique, et plus particulièrement PSTN.

11. Système permettant d'exécuter l'un des procédés susvisés.

12. Unité de communication mobile, comprenant des moyens pour une identification d'un service, demandée par un appel allant vers une unité de communication mobile (MS) et venant d'un et/ou via un réseau fixe et/ou via un réseau de communication mobile, moyennant l'exploitation d'un élément d'information additionnel (BACKUP)
- qui est prévu dans un message de signalisation (Setup) communiqué à l'unité de communication mobile et contenant des éléments d'information spécifiques pour le service et
- dans lequel sont regroupées toutes les informations disponibles collectées relatives à des capacités de support spécifiques pour le service.
